# EUROPEAN PATENT SPECIFICATION

(11) **EP 3 238 852 B1**
(45) Date of publication and mention of the grant of the patent: **07.04.2021**
(21) Application number: 17168038.2
(22) Date of filing: 25.04.2017
(51) Int. Cl.: B22C 3/00, B22D 29/00, G01N 23/04

(54) **CASTING CORE AND METHOD FOR TESTING A HOLLOW METAL ARTICLE**
GIESSKERN UND VERFAHREN ZUM TESTEN EINES HOHLEN METALLGEGENSTANDS
NOYAU DE COULÉE ET PROCÉDÉ POUR TESTER UN ARTICLE MÉTALLIQUE CREUX

(30) Priority: 25.04.2016 US 201615137183
(43) Date of publication of application: 01.11.2017
(73) Proprietor: Raytheon Technologies Corporation, Farmington, CT 06032 (US)
(72) Inventor: CASTLE, Lea Kennard, Vernon, CT Connecticut 06066 (US); BOCHIECHIO, Mario P., Vernon, CT Connecticut 06066 (US); WOODARD, Shiela R., South Windsor, CT Connecticut 06074 (US); AUXIER, James Tilsley, Bloomfield, CT Connecticut 06002 (US)
(74) Representative: Dehns

(56) References cited:
- JP-A- H05 228 611
- US-A- 2 812 562
- US-A- 5 242 007
- US-A1- 2003 136 540

## Description

### BACKGROUND

Investment casting is known and used to fabricate metal articles. For example, gas turbine engine components, such as airfoils, are fabricated by investment casting. For articles that are hollow, an internal cavity can be formed using a core that represents a positive projection of negative features that are to be formed in the casting process. A wax pattern is provided around the core in the geometry of the component to be cast. A refractory shell is formed around the wax pattern and the wax is then removed to form a mold cavity between the core and the shell. Molten metal is poured into the mold cavity. After solidification of the metal, the shell is mechanically removed and the core is chemically removed by leaching.

US 2812562 discloses a method of casting metallic articles, US 5242007 discloses X-ray detection of residual ceramic material inside hollow metal articles, US 2003/136540 discloses a method for imaging inclusions in metal or metal alloy castings and JP H05 228611 discloses a method for inspecting remained core in a precision casting.

### SUMMARY

A hollow metal article is fabricated by casting a molten metal alloy around a core that had a ceramic core body and an x-ray radiopaque coating disposed on the ceramic core body. The core is chemically removed. A method for testing the hollow metal article is defined in claim 1.

In a further embodiment of the foregoing embodiment, the x-ray radiopaque coating has a greater x-ray attenuation than the hollow metal article.

In a further embodiment of any of the foregoing embodiments, the x-ray radiopaque coating includes at least one refractory metal chemical element.

In a further embodiment of the foregoing embodiment, at least one refractory metal chemical element is selected from a group consisting of niobium, molybdenum, tantalum, tungsten, rhenium, and combinations thereof.

In a further embodiment of any of the foregoing embodiments, at least one refractory metal chemical element is selected from a group consisting of titanium, vanadium, chromium, zirconium, hafnium, ruthenium, rhodium, osmium, iridium, and combinations thereof.

A further embodiment of any of the foregoing embodiments includes submitting the hollow metal article to an additional removal process if any of the x-ray radiopaque coating of the core remains in the hollow metal article.

A method for testing a hollow metal article is defined in claim 13.

In a further embodiment of any of the foregoing embodiments, x-ray radiopaque coating encloses the ceramic core body.

In a further embodiment of any of the foregoing embodiments, the x-ray radiopaque coating includes at least one refractory metal chemical element.

In a further embodiment of any of the foregoing embodiments, the at least one refractory metal chemical element is in metallic form.

In a further embodiment of any of the foregoing embodiments, the at least one refractory metal chemical element is in oxide form.

In a further embodiment of any of the foregoing embodiments, the x-ray radiopaque coating consists of at least one refractory metal chemical element in metallic form, oxide form, or combinations thereof.

A further embodiment of any of the foregoing embodiments includes fabricating the core by depositing the x-ray radiopaque coating on the ceramic core body.

In a further embodiment of any of the foregoing embodiments, x-ray radiopaque coating has a thickness of 13 micrometers or less.

In a further embodiment of any of the foregoing embodiments, the ceramic core body has a maximum thickness and the x-ray radiopaque coating has a thickness of 5% or less of the maximum thickness of the ceramic core body.

The present invention further provides casting core as defined in claim 7.

In a further embodiment of any of the foregoing embodiments, the x-ray radiopaque coating encloses the ceramic core body.

In a further embodiment of any of the foregoing embodiments, the x-ray radiopaque coating includes at least one refractory metal chemical element.

In a further embodiment of any of the foregoing embodiments, the x-ray radiopaque coating includes at least one refractory metal chemical element selected from a group consisting of niobium, molybdenum, tantalum, tungsten, rhenium, titanium, vanadium, chromium, zirconium, hafnium, ruthenium, rhodium, osmium, iridium, and combinations thereof.

In a further embodiment of any of the foregoing embodiments, the ceramic core body has a maximum thickness and the x-ray radiopaque coating has a thickness of 5% or less of the maximum thickness of the ceramic core body.

### BRIEF DESCRIPTION OF THE DRAWINGS

The various features and advantages of the present disclosure will become apparent to those skilled in the art from the following detailed description. The drawings that accompany the detailed description can be briefly described as follows.
Figure 1 illustrates an example method for testing a hollow metal article.
Figure 2 illustrates an example of a casting core that can be used in connection with the method of Figure 1.
Figure 3 illustrates a sectioned view of the core of Figure 2.

### DETAILED DESCRIPTION

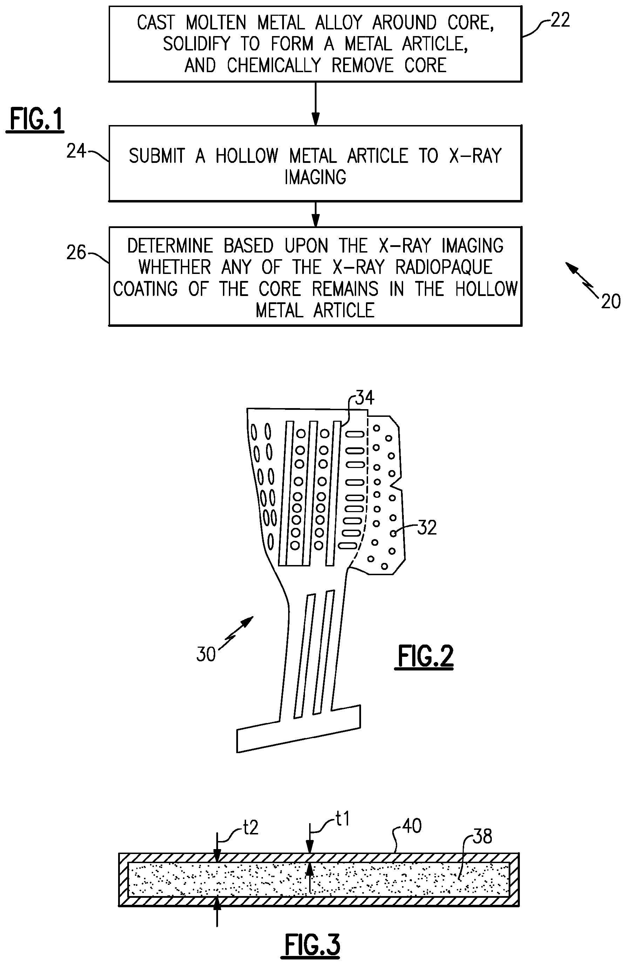

Figure 1 schematically illustrates an example method 20 for testing a hollow metal article. As will be appreciated, the hollow metal article may be, but is not limited to, gas turbine engine components such as airfoils that are cast of a superalloy material (e.g., a nickel- or cobalt-based alloy). The method 20 may be used as a replacement to neutron radiography testing in connection with fabrication of the hollow metal article, or used as a separate, stand-alone testing technique after fabrication of the hollow metal article.

As an example, at 22 the fabrication of the hollow metal article may include casting a molten metal alloy around a core and solidifying the molten metal alloy to form a metal article. After solidification, the core is chemically removed from the metal article, such as by chemical leaching with a strong pH base solution, to form a hollow cavity in the article.

The leaching process may not fully remove the core. For instance, hollow cavities that have small passages, serpentine passages, and/or "dead-end" passages have the potential to impede core removal and result in a residual amount of the core remaining in the article. In this regard, the method 20 provides a technique for non-destructively determining by x-ray imagery whether any residual amount of the core remains in the article after leaching.

Figure 2 shows an example of a core 30 that may be used in connection with the method 20. As will be appreciated, the geometry of the core 30 is not limited. For example only and to illustrate several potential features of the core 30, the core 30 is depicted with orifices 32 for forming pedestals or other structures in the article and elongated channels 34 for forming ribs in the article. Additionally, although shown with a relatively flat geometry, the core 30 may be contoured or curved according to the desired geometry of a given article and hollow cavity.

The core 30 is adapted for detection by x-ray imagery in the method 20. For instance, as shown in the sectioned view in Figure 3, the core 30 includes a ceramic core body 38 and an x-ray radiopaque coating 40 disposed on, and bonded with, the ceramic core body 38. The ceramic core body 38 may be formed of one or more ceramic oxide materials. Such ceramic oxide materials may include, but are not limited to silicates, such as aluminosilicate and zirconium silicate, silica, alumnia, calcia, magnesia, yttria and combinations thereof.

In the illustrated example, the x-ray radiopaque coating 40 is a layer of relatively uniform thickness that encloses the ceramic core body 38. Alternatively, the x-ray radiopaque coating 40 may be disposed on only a portion of the ceramic core body 38, leaving other portions of the ceramic core body 38 without the x-ray radiopaque coating 40. The x-ray radiopaque coating 40 may be deposited on the ceramic core body by air plasma spray, low pressure plasma spray, physical vapor deposition, chemical vapor deposition, dip coating, or brush coating, but is not limited to these deposition techniques.

The x-ray radiopaque coating 40 has greater x-ray attenuation than the metal (e.g., superalloy) from which the article is formed. For instance, the x-ray radiopaque coating 40 includes at least one refractory metal chemical element. The refractory metal chemical element or elements may be niobium, molybdenum, tantalum, tungsten, rhenium, titanium, vanadium, chromium, zirconium, hafnium, ruthenium, rhodium, osmium, iridium, or combinations thereof.

The refractory metal chemical element or elements may be in metallic form, oxide form, or a combination of metallic form and oxide form. In one example, the x-ray radiopaque coating 40 may also include additional materials or constituents that do not function for x-ray detection. In another example, the x-ray radiopaque coating 40 has only the refractory metal chemical element or elements, and possibly impurities.

The x-ray radiopaque coating 40 permits any residual amount of the core 30 in the article to be distinguished in the x-ray imagery of the method 20. For example, at 24 the method 20 includes submitting the hollow metal article to x-ray imaging. The x-ray imaging can be conducted on known equipment using techniques known to those skilled in the art. In a further example, the orientation of the hollow metal article may be manipulated such that the x-ray imaging captures one or more views of any small passages, serpentine passages, and/or "dead-end" passages of the article that may have a greater potential to impede core removal.

The x-ray imaging produces one or more radiographs that contains an image of the article. At 26 the method 20 includes determining based upon the x-ray imaging whether any of the x-ray radiopaque coating 40 of the core 30 remains in the hollow metal article. For example, the x-ray radiopaque coating 40 has greater x-ray attenuation than the metal alloy of the article, and any residual amount of the x-ray radiopaque coating 40 will absorb or scatter x-rays to a greater degree than the metal. When exposed to x-ray imaging, any residual amount of the x-ray radiopaque coating 40 will thus present with greater contrast on the radiograph. The greater contrast is then used to identify the presence, or not, of any residual amount of the core 30 in the article. For example, since the x-ray radiopaque coating 40 is bonded with the ceramic core body 38, the presence of the x-ray radiopaque coating 40 may be indicative of residual ceramic core body 38 in the hollow metal article (i.e., a residual piece of the core 30 that has the x-ray radiopaque coating 40 and the ceramic core body 38). In this regard, the refractory elements that have heavier molecular weights, in comparison to nickel or cobalt of the metal alloy of the article, may provide greater contrast. If any residual amount of the core 30 is detected in the article, the article can be submitted to an additional removal process, such as further chemical leaching, to remove the residual amount of the core 30. The article can then be tested again using the method 20 to determine whether any of the core 30 still remains.

In a further example, the core 30 includes a relatively small amount of the x-ray radiopaque coating 40 in comparison to the ceramic core body 38. For instance, the x-ray radiopaque coating 40 may have a thickness t1 of 13 micrometers or less. In a further example, the ceramic core body 38 has a maximum thickness t2 and the x-ray radiopaque coating 40 has a thickness of 5% or less of the maximum thickness of the ceramic core body 38. Although a greater amount of the x-ray radiopaque coating 40 could be used and detected in the method 20, greater amounts increase the size of the core 30 and potentially exceed the desired or required dimensional limits of the core 30.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

## Claims

1. A method for testing a hollow metal article, the method comprising:
submitting a hollow metal article to x-ray imaging, wherein the hollow metal article was fabricated by casting a molten metal alloy around a core (30) that had a ceramic core body (38) and an x-ray radiopaque coating (40) disposed on the ceramic core body (38), the core (30) having been chemically removed, wherein the ceramic core body (38) has a maximum thickness and the x-ray radiopaque coating (40) has a thickness of 5% or less of the maximum thickness of the ceramic core body; and
determining based upon the x-ray imaging whether any of the x-ray radiopaque coating (40) of the core (30) remains in the hollow metal article.

2. The method as recited in claim 1, wherein the x-ray radiopaque coating (40) has a greater x-ray attenuation than the hollow metal article.

3. The method as recited in claim 1 or 2, wherein the x-ray radiopaque coating (40) includes at least one refractory metal chemical element.

4. The method as recited in claim 3, wherein the at least one refractory metal chemical element is selected from a group consisting of niobium, molybdenum, tantalum, tungsten, rhenium, and combinations thereof.

5. The method as recited in claim 3 or 4, wherein the at least one refractory metal chemical element is selected from a group consisting of titanium, vanadium, chromium, zirconium, hafnium, ruthenium, rhodium, osmium, iridium, and combinations thereof.

6. The method as recited in any preceding claim, further comprising submitting the hollow metal article to an additional removal process if any of the x-ray radiopaque coating (40) of the core (30) remains in the hollow metal article.

7. A casting core (30) comprising:
a ceramic core body (38) configured for forming a cavity in a metal article; and
an x-ray radiopaque coating (40) disposed on the ceramic core body (38),
**characterized in that** the ceramic core body (38) has a maximum thickness and the x-ray radiopaque coating (40) has a thickness of 5% or less of the maximum thickness of the ceramic core body.

8. The casting core as recited in claim 7, wherein the x-ray radiopaque coating (40) encloses the ceramic core body (38).

9. The casting core as recited in claim 7 or 8, wherein the x-ray radiopaque coating (40) includes at least one refractory metal chemical element.

10. The casting core as recited in claim 7, 8 or 9, wherein the x-ray radiopaque coating (40) includes at least one refractory metal chemical element selected from a group consisting of niobium, molybdenum, tantalum, tungsten, rhenium, titanium, vanadium, chromium, zirconium, hafnium, ruthenium, rhodium, osmium, iridium, and combinations thereof.

11. The casting core as recited in claim 7, 8 or 9, wherein the x-ray radiopaque coating (40) consists of the at least one refractory metal chemical element in metallic form, oxide form, or combinations thereof.

12. The casting core as recited in any of claims 7 to 11, wherein the x-ray radiopaque coating (40) has a thickness of 13 micrometers or less.

13. A method for testing a hollow metal article, the method comprising:
casting a molten metal alloy around a core (30) and solidifying the molten metal alloy to form a metal article, wherein the core (30) is a core as recited in any of claims 7 to 12;
chemically removing the core (30) from the metal article to form a hollow cavity in the metal article; and
after chemically removing the core (30), submitting the metal article to x-ray imaging and determining based upon the x-ray imaging whether any of the x-ray radiopaque coating of the core (30) remains in the hollow cavity.

14. The method as recited in claim 13, further comprising fabricating the core (30) by depositing the x-ray radiopaque coating (40) on the ceramic core body (38).

## Patentansprüche

1. Verfahren zum Testen eines hohlen Metallgegenstands, wobei das Verfahren Folgendes umfasst:
Unterziehen eines hohlen Metallgegenstands einer Röntgenbildgebung, wobei der hohle Metallgegenstand durch ein Gießen einer geschmolzenen Metalllegierung um einen Kern (30) hergestellt wurde, der einen keramischen Kernkörper (38) und eine röntgenstrahlenundurchlässige Beschichtung (40) aufwies, die auf den keramischen Kernkörper (38) aufgebracht ist, wobei der Kern (30) chemisch entfernt worden ist, wobei der keramische Kernkörper (38) eine maximale Dicke aufweist und die röntgenstrahlenundurchlässige Beschichtung (40) eine Dicke von 5 % oder weniger der maximalen Dicke des keramischen Kernkörpers aufweist; und
Bestimmen basierend auf der Röntgenbildgebung, ob etwas von der röntgenstrahlenundurchlässigen Beschichtung (40) des Kerns (30) in dem hohlen Metallgegenstand bleibt.

2. Verfahren nach Anspruch 1, wobei die röntgenstrahlenundurchlässige Beschichtung (40) eine größere Röntgenstrahlenschwächung als der hohle Metallgegenstand aufweist.

3. Verfahren nach Anspruch 1 oder 2, wobei die röntgenstrahlenundurchlässige Beschichtung (40) mindestens ein chemisches Element aus Refraktärmetall beinhaltet.

4. Verfahren nach Anspruch 3, wobei das mindestens eine chemische Element aus Refraktärmetall aus einer Gruppe ausgewählt wird, die aus Niob, Molybdän, Tantal, Wolfram, Rhenium und Kombinationen davon besteht.

5. Verfahren nach Anspruch 3 oder 4, wobei das mindestens eine chemische Element aus Refraktärmetall aus einer Gruppe ausgewählt wird, die aus Titan, Vanadium, Chrom, Zirkonium, Hafnium, Ruthenium, Rhodium, Osmium, Iridium und Kombinationen davon besteht.

6. Verfahren nach einem der vorhergehenden Ansprüche, das ferner ein Unterziehen des hohlen Metallgegenstands einem zusätzlichen Entfernungsprozess umfasst, wenn etwas von der röntgenstrahlenundurchlässigen Beschichtung (40) des Kerns (30) in dem hohlen Metallgegenstand bleibt.

7. Gießkern (30), der Folgendes umfasst:
einen keramischen Kernkörper (38), der zum Bilden eines Hohlraums in einem Metallgegenstand konfiguriert ist; und
eine röntgenstrahlenundurchlässige Beschichtung (40), die auf den keramischen Kernkörper (38) aufgebracht ist,
**dadurch gekennzeichnet, dass** der keramischen Kernkörper (38) eine maximale Dicke aufweist und die röntgenstrahlenundurchlässige Beschichtung (40) eine Dicke von 5 % oder weniger der maximalen Dicke des keramischen Kernkörpers aufweist.

8. Gießkern nach Anspruch 7, wobei die röntgenstrahlenundurchlässige Beschichtung (40) den keramischen Kernkörper (38) umschließt.

9. Gießkern nach Anspruch 7 oder 8, wobei die röntgenstrahlenundurchlässige Beschichtung (40) mindestens ein chemisches Element aus Refraktärmetall beinhaltet.

10. Gießkern nach Anspruch 7, 8 oder 9, wobei die röntgenstrahlenundurchlässige Beschichtung (40) mindestens ein chemisches Element aus Refraktärmetall beinhaltet, das aus einer Gruppe ausgewählt wird, die aus Niob, Molybdän, Tantal, Wolfram, Rhenium, Titan, Vanadium, Chrom, Zirkonium, Hafnium, Ruthenium, Rhodium, Osmium, Iridium und Kombinationen davon besteht.

11. Gießkern nach Anspruch 7, 8 oder 9, wobei die röntgenstrahlenundurchlässige Beschichtung (40) aus dem mindestens einen chemischen Element aus Refraktärmetall in metallischer Form, Oxidform oder Kombinationen davon besteht.

12. Gießkern nach einem der Ansprüche 7 bis 11, wobei die röntgenstrahlenundurchlässige Beschichtung (40) eine Dicke von 13 Mikrometern oder weniger aufweist.

13. Verfahren zum Testen eines hohlen Metallgegenstands, wobei das Verfahren Folgendes umfasst:
Gießen einer geschmolzenen Metalllegierung um einen Kern (30) und Verfestigen der geschmolzenen Metalllegierung, um einen Metallgegenstand zu bilden, wobei es sich bei dem Kern (30) um einen Kern nach einem der Ansprüche 7 bis 12 handelt;
chemisches Entfernen des Kerns (30) aus dem Metallgegenstand, um einen hohlen Hohlraum in dem Metallgegenstand zu bilden; und
nach einem chemischen Entfernen des Kerns (30) Unterziehen des Metallgegenstands einer Röntgenbildgebung und Bestimmen basierend auf der Röntgenbildgebung, ob etwas von der röntgenstrahlenundurchlässigen Beschichtung des Kerns (30) in dem hohlen Hohlraum bleibt.

14. Verfahren nach Anspruch 13, das ferner ein Herstellen des Kerns (30) durch ein Aufbringen der röntgenstrahlenundurchlässigen Beschichtung (40) auf den keramischen Kernkörper (38) umfasst.

## Revendications

1. Procédé pour tester un article métallique creux, le procédé comprenant :
la soumission d'un article métallique creux à une imagerie aux rayons X, dans lequel l'article métallique creux a été fabriqué en coulant un alliage métallique fondu autour d'un noyau (30) qui avait un corps de noyau en céramique (38) et un revêtement radio-opaque aux rayons X (40) disposé sur le corps de noyau en céramique (38), le noyau (30) ayant été retiré chimiquement, dans lequel le corps de noyau en céramique (38) présente une épaisseur maximale et le revêtement radio-opaque aux rayons X (40) présente une épaisseur de 5 % ou moins de l'épaisseur maximale du corps de noyau en céramique ; et
le fait de déterminer, sur la base de l'imagerie aux rayons X, si toute partie du revêtement radio-opaque aux rayons X (40) du noyau (30) reste dans l'article métallique creux.

2. Procédé selon la revendication 1, dans lequel le revêtement radio-opaque aux rayons X (40) présente une atténuation des rayons x plus élevée que l'article métallique creux.

3. Procédé selon la revendication 1 ou 2, dans lequel le revêtement radio-opaque aux rayons X (40) comporte au moins un élément chimique métallique réfractaire.

4. Procédé selon la revendication 3, dans lequel l'au moins un élément chimique métallique réfractaire est choisi dans un groupe composé de niobium, molybdène, tantale, tungstène, rhénium et leurs combinaisons.

5. Procédé selon la revendication 3 ou 4, dans lequel l'au moins un élément chimique métallique réfractaire est choisi dans un groupe composé de titane, vanadium, chrome, zirconium, hafnium, ruthénium, rhodium, osmium, iridium et leurs combinaisons.

6. Procédé selon une quelconque revendication précédente, comprenant en outre la soumission de l'article métallique creux à un processus de retrait supplémentaire si toute partie du revêtement radio-opaque aux rayons X (40) du noyau (30) reste dans l'article métallique creux.

7. Noyau de coulée (30) comprenant :
un corps de noyau en céramique (38) conçu pour former une cavité dans un article métallique ; et
un revêtement radio-opaque aux rayons X (40) disposé sur le corps de noyau en céramique (38),
**caractérisé en ce que** le corps de noyau en céramique (38) présente une épaisseur maximale et le revêtement radio-opaque aux rayons X (40) présente une épaisseur de 5 % ou moins de l'épaisseur maximale du corps de noyau en céramique.

8. Noyau de coulée selon la revendication 7, dans lequel le revêtement radio-opaque aux rayons X (40) enveloppe le corps de noyau en céramique (38).

9. Noyau de coulée selon la revendication 7 ou 8, dans lequel le revêtement radio-opaque aux rayons X (40) comporte au moins un élément chimique métallique réfractaire.

10. Noyau de coulée selon la revendication 7, 8 ou 9, dans lequel le revêtement radio-opaque aux rayons X (40) comporte au moins un élément chimique métallique réfractaire choisi dans un groupe composé de niobium, molybdène, tantale, tungstène, rhénium, titane, vanadium, chrome, zirconium, hafnium, ruthénium, rhodium, osmium, iridium et leurs combinaisons.

11. Noyau de coulée selon la revendication 7, 8 ou 9, dans lequel le revêtement radio-opaque aux rayons X (40) se compose de l'au moins un élément chimique métallique réfractaire sous forme métallique, sous forme oxyde ou leurs combinaisons.

12. Noyau de coulée selon l'une quelconque des revendications 7 à 11, dans lequel le revêtement radio-opaque aux rayons X (40) présente une épaisseur de 13 micromètres ou moins.

13. Procédé pour tester un article métallique creux, le procédé comprenant :
la coulée d'un alliage métallique fondu autour d'un noyau (30) et la solidification de l'alliage métallique fondu pour former un article métallique, dans lequel le noyau (30) est un noyau selon l'une quelconque des revendications 7 à 12 ;
le retrait chimique du noyau (30) de l'article métallique pour former une cavité creuse dans l'article métallique ; et
après le retrait chimique du noyau (30), la soumission de l'article métallique à une imagerie aux rayons X et le fait de déterminer, sur la base de l'imagerie aux rayons X, si toute partie du revêtement radio-opaque aux rayons X du noyau (30) reste dans la cavité creuse.

14. Procédé selon la revendication 13, comprenant en outre la fabrication du noyau (30) en déposant le revêtement radio-opaque aux rayons X (40) sur le corps de noyau en céramique (38).
